# EUROPÄISCHE PATENTANMELDUNG

(11) **EP 4 450 962 A1**
(43) Veröffentlichungstag der Anmeldung: **23.10.2024**
(21) Anmeldenummer: 23168841.7
(22) Anmeldetag: 20.04.2023
(51) Int. Cl.: G01N 27/28, H04B 5/00, G08C 17/00, G08C 23/00

(54) **UNIVERSAL-SCHNITTSTELLE ZWISCHEN EINEM PRÜFKOPFAUFNAHMEELEMENT UND EINEM PRÜFKOPF**

(71) Anmelder: Georg Fischer Rohrleitungssysteme AG, 8201 Schaffhausen (CH)
(72) Erfinder: Hufschmid, Elmar, 79774 Albbruck (DE); Hartmann, Thomas, 88212 Ravensburg (DE); Ciobanu, Calin, Brea, CA 92821 (US); Stumpp, Jürgen, 8197 Rafz (CH); Kleinbruckner, Philipp, 8262 Ramsen (CH)
(74) Vertreter: Fenner, Seraina

(57) **Zusammenfassung**

Sensoranordnung zur Messung von Eigenschaften von Flüssigkeiten und Gasen beinhaltend, einen Prüfkopf und ein Prüfkopfaufnahmeelement, wobei der Prüfkopf und das Prüfkopfaufnahmeelement lösbar miteinander verbindbar sind, wobei die Sensoranordnung eine galvanisch getrennte Schnittstelle, gebildet durch eine induktive Schnittstelle und/oder eine galvanisch gekoppelte Schnittstelle aufweist, wobei die galvanisch getrennte Schnittstelle und/oder die galvanisch gekoppelte Schnittstelle ausschliesslich zur Energieübertragung vom Prüfkopfaufnahmeelement an den Prüfkopf dient, wobei die Sensoranordnung mindestens eine optische Schnittstelle oder mindestens eine Bluetooth-Schnittstelle zur bidirektionalen Datenübertragung zwischen Prüfkopf und Prüfkopfaufnahmeelement aufweist.

## Beschreibung

Die Erfindung betrifft eine Sensoranordnung zur Messung von Eigenschaften von Flüssigkeiten und Gasen beinhaltend, einen Prüfkopf und ein Prüfkopfaufnahmeelement, wobei der Prüfkopf und das Prüfkopfaufnahmeelement lösbar miteinander verbindbar sind, wobei die Sensoranordnung eine galvanisch getrennte Schnittstelle, gebildet durch eine induktive Schnittstelle und/oder eine galvanisch gekoppelte Schnittstelle aufweist, wobei die galvanisch getrennte Schnittstelle und/oder die galvanisch gekoppelte Schnittstelle ausschliesslich zur Energieübertragung vom Prüfkopfaufnahmeelement an den Prüfkopf dient.

Zur Analyse von Flüssigkeiten und Gasen und deren Eigenschaften werden oft Sensoren verwendet bei denen ein Prüfkopf bzw. ein Sensor lösbar mit einem entsprechenden Aufnahmeelement gepaart ist, das wiederum über ein Kabel mit einer Auswerteinheit fest verbunden ist. An das Aufnahmeelement lassen sich unterschiedliche Prüfköpfe anschliessen wie z.B. pH-Sensoren, Redox-Sensoren, Chlor-Sensoren, Trübungs-Sensoren, um nur ein paar davon zu nennen. Grundsätzlich alle Arten von Sensoren die zur Analyse von Flüssigkeiten und Gasen einsetzbar sind lassen sich an das Aufnahmeelement anschliessen. Solche Sensoren sind öfters zu reinigen, kalibrieren und justieren, weshalb der zweiteilige Aufbau von Vorteil ist und der Prüfkopf vom Aufnahmeelement einfach abnehmbar ist. Zudem lassen sich, wie bereits zuvor erwähnt, dadurch unterschiedliche Prüfköpfe mit dem Aufnahmeelement koppeln, wodurch zur Analyse unterschiedlicher Eigenschaften der Flüssigkeit oder Gasen dieselbe Auswerteinheit mit fest angeschlossenem Aufnahmeelement verwendet werden kann und nur der Prüfkopf auszutauschen ist.

Die EP 1 565 898 A1 offenbart eine modulare Auswerteinheit bei dem ein Sensormodul und ein Elektronikmodul eine induktive Schnittstelle aufweisen, die der Energie- wie auch der Datenübertragung dient, wobei das Elektronikmodul zur Energieversorgung mit der Sende- und Empfangsstation über eine Versorgungsleitung verbunden ist und der Datenaustausch induktiv erfolgt.

Die DE 10 2019 118 712 offenbart einen Sensor, der mit einem Messsystem über eine galvanisch getrennte Verbindung verbunden ist. Die Datenübertragung zwischen dem Sensor und dem Messsystem erfolgt über eine erste induktive Schnittstelle und die Energieübertragung zwischen Messsystem und Sensor erfolgt über eine zweite induktive Schnittstelle.

Im oben aufgeführten Stand der Technik werden die Daten wie auch die Energie jeweils über eine induktive Schnittstelle übertragen. Dies hat den Nachteil, dass die Art der Verbindungsstelle kaum eine Toleranz zulässt, denn nur eine geringe Vergrösserung der Distanz zwischen den beiden Spulen kann die Datenübermittlung stören oder die Übertragungsrate massgeblich verringern.

Es ist Aufgabe der Erfindung eine Sensoranordnung vorzuschlagen, welche eine sichere und einfache Datenübermittlung mit einer hohen Übermittlungsrate ermöglicht, sowie kompakt und kostengünstig herstellbar ist.

Diese Aufgabe wird erfindungsgemäss dadurch gelöst, dass die Sensoranordnung mindestens eine optische Schnittstelle oder mindestens eine Bluetooth-Schnittstelle zur bidirektionale Datenübertragung zwischen Prüfkopf und Prüfkopfaufnahmeelement aufweist.

Die erfindungsgemässe Sensoranordnung dient der Messung von Eigenschaften von Flüssigkeiten und Gasen. Die Sensoranordnung beinhaltet einen Prüfkopf, der als Sensor ausgebildet ist. Wobei alle möglichen Arten an Sensoren, die zur Analyse von Flüssigkeiten und Gasen geeignet sind, einsetzbar sind. Die Sensoranordnung beinhaltet ebenso ein Prüfkopfaufnahmeelement, das mit dem Prüfkopf wieder lösbar verbindbar ist. Die erfindungsgemässe Sensoranordnung weist zur Energieübertragung vorzugsweise eine galvanisch getrennte Schnittstelle, gebildet durch eine induktive Schnittstelle, auf. Alternativ weist die erfindungsgemässe Sensoranordnung zur Energieübertragung eine galvanisch gekoppelte Schnittstelle auf, die vorzugsweise durch eine metallische Kontaktierung zwischen dem Prüfkopf und dem Prüfkopfaufnahmeelement gebildet ist. Als vorteilhaft hat sich gezeigt, wenn dazu jeweils am Prüfkopf und am Prüfkopfaufnahmeelement ein metallisch leitendes Blech angeordnet ist, die beim Zusammenführen der beiden Komponente der Sensoranordnung miteinander kontaktieren. Dies ermöglicht eine noch höhere Energieübertragung, z.B. für energieintensive Sensorelemente. Selbstverständlich kann die galvanisch gekoppelte Schnittstelle auch anders ausgebildet sein, ein galvanisches Element ist vorzugsweise dazu am Prüfkopf und eines am Prüfkopfaufnahmeelement angeordnet und ebenfalls miteinander wieder lösbar verbindbar, wenn denn eine solche galvanisch gekoppelte Schnittstelle an der erfindungsgemässen Sensoranordnung vorgesehen ist. Zudem ist es auch möglich, dass die Sensoranordnung eine galvanisch getrennte Schnittstelle, durch eine induktive Schnittstelle aufweist, wie auch eine galvanisch gekoppelte Schnittstelle, wobei beide Schnittstellen jeweils ausschliesslich der Energieübertragung dienen, sowohl wenn beide an der Sensoranordnung angeordnet sind wie auch wenn nur eine der Schnittstellen an der erfindungsgemässen Sensoranordnung angeordnet ist. Die erfindungsgemässe Sensoranordnung weist mindesten eine optische Schnittstelle zwischen dem Prüfkopf und dem Prüfkopfaufnahmeelement zur bidirektionalen Datenübertragung auf oder mindestens eine Bluetooth-Schnittstelle zwischen Prüfkopf und dem Prüfkopfaufnahmeelement zur bidirektionale Datenübertragung. Selbstverständlich sind unter einer bidirektionalen Datenübertagung auch zwei unidirektionale Datenübertragungen zu verstehen. Wobei sich die Bluetooth-Schnittstelle am Prüfkopf wie auch am Prüfkopfaufnahmeelement zur Datenübermittlung mit mobilen Kommunikationsendgeräten wie Mobiltelefon, Computer oder Tablet eignet wie auch zur Kommunikation mit Messendgeräten, Leitsystemen oder Kalibriergeräten.

Eine bevorzugte Ausführungsform besteht darin, dass jeweils ein Sender und ein Empfänger der optischen Schnittstelle am Prüfkopf und am Prüfkopfaufnahmeelement angeordnet sind, wodurch die bidirektionale Datenübertragung gewährleistet wird. Das heisst, das sowohl am Prüfkopf wie auch am Prüfkopfaufnahmeelement ein Sender und ein Empfänger angeordnet sind und die entsprechenden komplementären Elemente an der anderen Komponente der Sensoranordnung gegenüberliegend angeordnet sind.

Eine optische bidirektionale Datenübertragung hat zudem den Vorteil, dass die Qualität der Daten überprüft wird. Das heisst, wenn die empfangenen Daten nicht den gesendeten Daten entsprechen bzw. eine Toleranz in der Abweichung der Signalqualität überschreiten, wird dies festgestellt und eine entsprechende Meldung erfolgt, beispielsweise der Prüfkopf muss gereinigt werden oder er ist neu zu justieren.

Selbstverständlich wäre auch eine Datenübertragung durch Hall-, GM-, oder MI-Sensoren denkbar.

Als vorteilhafte Ausführungsform hat sich gezeigt, wenn die induktive Schnittstelle durch Leiterbahnen aufweisenden Leiterplatten gebildet ist. Dies ermöglicht eine kompakte und äusserst robuste Bauweise der Sensoranordnung bei einer hohen Energieübertragung.

Es hat sich als vorteilhaft gezeigt, wenn die Leiterplatten, die die induktive Schnittstelle bilden, sich parallel gegenüberliegend angeordnet sind.

Es ist vorteilhaft, wenn mindestens eine Leiterplatte der induktiven Schnittstelle am Prüfkopf und mindestens eine weitere Leiterplatte der induktiven Schnittstelle am Prüfkopfaufnahmeelement angeordnet sind.

Als weitere vorteilhafte Ausgestaltung hat sich gezeigt, wenn jeweils zwei Leiterplatten der induktiven Schnittstelle am Prüfkopf und am Prüfkopfaufnahmeelement angeordnet sind, was eine höhere Energieübertragung ermöglicht. Wodurch zwei induktive Schnittstellen gebildet werden.

Vorzugsweise sind die Leiterplatten der induktiven Schnittstelle flächig zueinander ausgerichtet. Es ist Vorteilhaft wenn die Leiterplatten der induktiven Schnittstelle parallel zur Längsachse der Sensoranordnung verlaufen.

Als weitere vorteilhafte Ausgestaltung hat sich gezeigt, wenn die Leiterplatten der induktiven Schnittstelle parallel zur Stirnseite des Prüfkopfs und des Prüfkopfaufnahmeelements verlaufen.

Vorzugsweise ist der Sender der optischen Schnittstelle durch eine LED gebildet. Dies ermöglicht ebenfalls eine kompakte und energiesparende Umsetzung einer optischen Schnittstelle.

Als vorteilhaft hat sich gezeigt, wenn der Prüfkopf und das Prüfkopfaufnahmeelement zylindrisch ausgebildet und ineinander steckbar, drehbar oder schraubbar sind.

Vorzugsweise sind die optischen Schnittstellen stirnseitig am Prüfkopf und am Prüfkopfaufnahmeelement angeordnet. Dies ermöglicht eine kompakte Bauform der Sensoranordnung.

Als weitere vorteilhafte Ausgestaltung sind die optischen Schnittstellen an parallel zur Längsachse und zueinander verlaufenden Flächen des Prüfkopfs und des Prüfkopfaufnahmeelements angeordnet. Wodurch die Sender und Empfänger der optischen Schnittstelle rechtwinklig zur Längsachse ausgerichtet sind.

Es ist vorteilhaft, wenn beim Einsatz einer Bluetooth-Schnittstelle, die Bluetooth-Schnittstelle anstelle der Anordnung der optischen Schnittstelle angeordnet ist.

Als bevorzugte Ausführungsform hat sich gezeigt, wenn die Sender und Empfänger der optischen Schnittstelle axial gegenüberliegend angeordnet sind. Dadurch lässt sich die Distanz zwischen Sender und Empfänger optimal einstellen und liefert eine hohe Datenübertragung wie eine gute Qualität der Daten.

Als vorteilhaft hat sich auch gezeigt, wenn die optischen Schnittstellen stirnseitig am Prüfkopf und am Prüfkopfaufnahmeelement angeordnet sind und die Sender und Empfänger auf einer separaten Leiterplatte platziert sind, die parallel zur Längsachse ausgerichtet ist.

Vorzugsweise sind der Sender und Empfänger der optischen Schnittstellen an einer anderen Leiterplatte als die induktive Schnittstelle angeordnet.

Das heisst, dass es vorteilhaft ist wenn, der Sender und Empfänger des Prüfkopfes wie auch der Sensor und Empfänger des Prüfkopfaufnahmeelements jeweils auf einer anderen Leiterplatte als die Leiterbahnen der induktiven Schnittstelle im Prüfkopf wie auch im Prüfkopfaufnahmeelement angeordnet sind.

Es ist vorteilhaft wenn die erfindungsgemässe Sensoranordnung Lichtleiter zur besseren Führung des optischen Signals aufweist. Dies ermöglicht eine flexiblere Anordnung des Senders und Empfängers der optischen Schnittstelle. So kann beispielsweise das Signal des Senders einer LED mittels Lichtleiter übertragen werden.

Alle Ausgestaltungmöglichkeiten sind untereinander frei kombinierbar.

Ausführungsbeispiele der Erfindung werden anhand der Figuren beschrieben, wobei sich die Erfindung nicht nur auf die dargestellten Ausführungsbeispiele beschränkt. Es zeigen:
- Fig. 1: eine schematische Darstellung einer Sensoranordnung bei der die optischen Schnittstellen stirnseitig angeordnet sind,
- Fig. 2: eine schematische Darstellung einer Sensoranordnung bei der die optischen Schnittstellen an parallel verlaufenden Flächen der Sensoranordnung angeordnet sind und
- Fig. 3: eine schematische Darstellung der Platzierung der LEDs auf einer separaten Leiterplatte mit Lichtleitern.

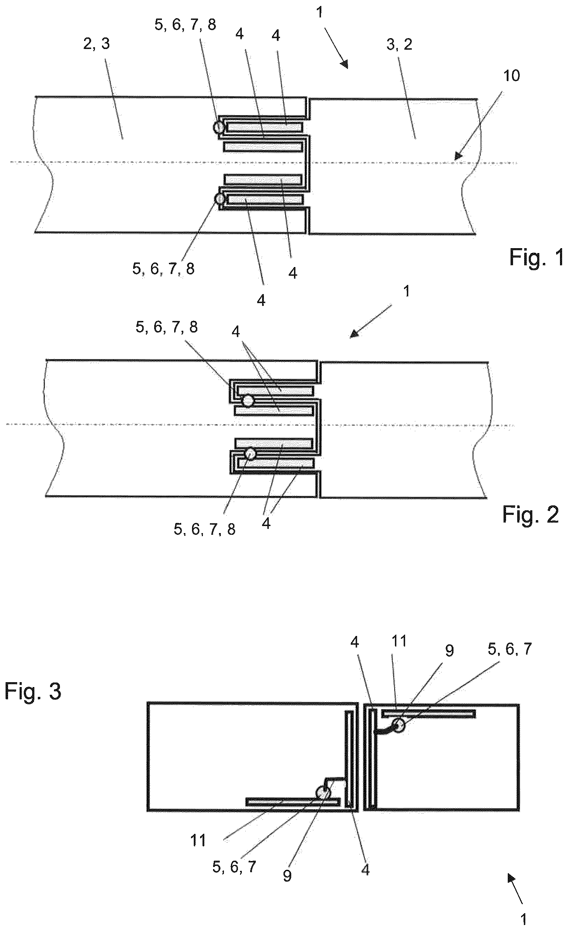

Die in Fig. 1 dargestellte Zeichnung zeigt eine schematische Darstellung einer Sensoranordnung 1 mit Prüfkopf 2 und Prüfkopfaufnahmeelement 3, welches Ende der beiden Teile wie ausgebildet ist, ob mit Nuten oder Federn spielt keine Rolle, weshalb beide Enden jeweils beide Bezugszeichnen aufweisen. Die in Fig. 1 und 2 dargestellten Ausführungsformen zeigen Enden des Prüfkopfs 2 und des Prüfkopfaufnahmeelements 3 die eine Nut und Feder Verbindung aufweisen und ineinandergreifen. Die Sensoranordnung 1 weist induktive Schnittstellen 4 auf, die durch Leiterbahnen auf Leiterplatten 4 gebildet sind. Die in den Figuren 1 und 2 abgebildeten Ausführungsformen weisen zwei parallel zur Längsachse 10 verlaufende galvanisch getrennte Schnittstellen 4 auf. Die Schnittstellen 4 werden durch parallel zueinander und zur Längsachse 10 verlaufende Leiterplatten 4 gebildet die Leiterbahnen zur ausschliesslichen induktiven Energieübertragung aufweisen. In den Figuren 1 und 2 sind jeweils zwei Paare solcher Leiterplatten 4 dargestellt, selbstverständlich kann auch nur ein Paar die induktive Schnittstelle bilden, oder noch weitere Leiterplatten zur induktiven Schnittstelle eingesetzt werden. In der schematischen Darstellung in Fig. 1 sind die optischen Schnittstellen 5 stirnseitig angeordnet und ihre Ausrichtung ist parallel zur Längsachse, welche der Datenübertragung dienen. Um die bidirektionale Datenübertragung zu gewährleisten, sind zwei optische Schnittstellen 5 vorzusehen. Alternativ können die optischen Schnittstellen 5, wie in Fig. 2 dargestellt, auch auf parallel zur Längsachse 10 verlaufenden Flächen am Prüfkopf 2 und am Prüfkopfaufnahmeelement 3 angeordnet sein. Die optische Schnittstelle 5 ist in Fig. 2 rechtwinklig zur Längsachse ausgereicht. Alternative kann anstatt der optischen Schnittstelle 5 auch eine Bluetooth-Schnittstelle 8 verwendet werden.

Fig. 3 zeigt eine schematische Darstellung einer erfindungsgemässen Sensoranordnung 1 bei dem zur Übertagung des optischen Signals der optischen Schnittstelle 5 ein Lichtleiter 9 eingesetzt wird. Bei der abgebildeten Darstellung wird mittels Lichtleiter 9 das Signal des Senders 6 derart projiziert, dass der Empfänger 7 dies problemlos erfassen kann. Zudem verlaufen bei der in Fig. 3 dargestellten Ausführungsform die Leiterplatten 4 der induktiven Schnittstelle parallel zu den Stirnseiten des Prüfkopfs 2 und des Prüfkopfaufnahmeelements 3. Der Sender der optischen Schnittstelle 5 vorzugsweise eine LED ist mit einem Lichtleiter 9 gekoppelt. Als vorteilhaft hat sich gezeigt, wenn der Sender und der Empfänger 7 auf einer anderen Leiterplatte 4 als die Leiterbahnen der induktiven Schnittstelle 4 angeordnet sind. Als vorteilhaft hat sich gezeigt, wenn die Leiterplatte 11 des Senders 6 und Empfängers 7 in einem 90° Winkel zur Leiterplatte der induktiven Schnittstelle 4 stehen. Wobei die Anordnung der Leiterplatten 4, 11 in Fig.3 nur beispielhaft ist und andere Anordnungen bei denen die Sender und Empfänger auf einer separaten Leiterplatte bzw. nicht auf derselben Leiterplatte wie die Leiterbahnen der induktiven Schnittstelle ist, denkbar sind. In den Figuren 1 bis 3 ist keine galvanisch gekoppelte Schnittstelle abgebildet aber es versteht sich von selbst, dass diese durch herkömmliche metallische Elemente gebildet ist, von denen jeweils mindestens eines am Prüfkopf 2 und mindestens eines am Prüfkopfaufnahmeelement 3 angeordnet ist.

### Bezugszeichenliste

- 1: Sendeanordnung
- 2: Prüfkopf
- 3: Prüfkopfaufnahmeelement
- 4: Induktive Schnittstelle / Leiterplatten
- 5: Optische Schnittstelle
- 6: Sender optische Schnittstelle
- 7: Empfänger optische Schnittstelle
- 8: Bluetooth
- 9: Lichtleiter
- 10: Längsachse Sensoranordnung
- 11: Leiterplatte

## Patentansprüche

1. Sensoranordnung (1) zur Messung von Eigenschaften von Flüssigkeiten und Gasen beinhaltend, einen Prüfkopf (2) und ein Prüfkopfaufnahmeelement (3), wobei der Prüfkopf (2) und das Prüfkopfaufnahmeelement (3) lösbar miteinander verbindbar sind, wobei die Sensoranordnung (1) eine galvanisch getrennte Schnittstelle, gebildet durch eine induktive Schnittstelle (4) und/oder eine galvanisch gekoppelte Schnittstelle aufweist, wobei die galvanisch getrennte Schnittstelle (4) und/oder die galvanisch gekoppelte Schnittstelle ausschliesslich zur Energieübertragung vom Prüfkopfaufnahmeelement (3) an den Prüfkopf (2) dient, **dadurch gekennzeichnet, dass** die Sensoranordnung (1) mindestens eine optische Schnittstelle (5) oder mindestens eine Bluetooth-Schnittstelle (8) zur bidirektionalen Datenübertragung zwischen Prüfkopf (2) und Prüfkopfaufnahmeelement (3) aufweist.

2. Sensoranordnung (1) gemäss Anspruch 1, **dadurch gekennzeichnet, dass** jeweils ein Sender (6) und ein Empfänger (7) der optischen Schnittstelle am Prüfkopf (2) und Prüfkopfaufnahmeelement (3) angeordnet ist.

3. Sensoranordnung (1) gemäss Anspruch 1, **dadurch gekennzeichnet, dass** die induktive Schnittstelle (4) durch Leiterbahnen aufweisende Leiterplatten (4) gebildet ist.

4. Sensoranordnung (1) gemäss Anspruch 3, **dadurch gekennzeichnet, dass** die Leiterplatten der induktiven Schnittstelle (4) sich parallel gegenüberliegend angeordnet sind.

5. Sensoranordnung (1) gemäss Anspruch 1, **dadurch gekennzeichnet, dass** die Leiterplatten der induktiven Schnittstelle (4) jeweils parallel zur Stirnseite des Prüfkopfs (2) und des Prüfkopfaufnahmeelements (3) angeordnet sind.

6. Sensoranordnung (1) gemäss einem der Ansprüche 1 bis 5, **dadurch gekennzeichnet, dass** der Sender (6) und Empfänger (7) der optischen Schnittstellen an einer anderen Leiterplatte (11) als die induktive Schnittstelle (4) angeordnet sind.

7. Sensoranordnung (1) gemäss einem der Ansprüche 1 bis 6, **dadurch gekennzeichnet, dass** der Sender (2) der optischen Schnittstelle (5) durch eine LED gebildet ist.

8. Sensoranordnung (1) gemäss einem der Ansprüche 1 bis 7, **dadurch gekennzeichnet, dass** der Prüfkopf (2) und das Prüfkopfaufnahmeelement (3) zylindrisch ausgebildet und ineinander steckbar, drehbar oder schraubbar sind.

9. Sensoranordnung (1) gemäss einem der Ansprüche 1 bis 8, **dadurch gekennzeichnet, dass** die optischen Schnittstellen (5) stirnseitig am Prüfkopf (2) und am Prüfkopfaufnahmeelement (3) angeordnet sind.

10. Sensoranordnung (1) gemäss einem der Ansprüche 1 bis 9, **dadurch gekennzeichnet, dass** die Sender (7) und Empfänger (8) der optischen Schnittstelle (5) parallel zur Längsachse (10) ausgerichtet sind.

11. Sensoranordnung (1) gemäss einem der Ansprüche 1 bis 10, **dadurch gekennzeichnet, dass** die Sender (6) und Empfänger (8) der optischen Schnittstelle (5) rechtwinklig zur Längsachse (10) ausgerichtet sind.

12. Sensoranordnung (1) gemäss einem der Ansprüche 1 bis 10, **dadurch gekennzeichnet, dass** die Sensoranordnung (1) Lichtleiter (9) zur besseren Erkennung bzw. einfacheren Positionierung des optischen Signals aufweist.
